(19) Europäisches Patentamt
European Patent Office
Office européen des brevets

(11) EP 3 422 282 A1

(12) **EUROPEAN PATENT APPLICATION**
published in accordance with Art. 153(4) EPC

(43) Date of publication:
**02.01.2019 Bulletin 2019/01**

(51) Int Cl.:
*G06Q 50/06* (2012.01)    *H02J 3/00* (2006.01)
*H02J 13/00* (2006.01)

(21) Application number: **16891612.0**

(22) Date of filing: **16.11.2016**

(86) International application number:
**PCT/JP2016/083959**

(87) International publication number:
**WO 2017/145456 (31.08.2017 Gazette 2017/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.02.2016 JP 2016034078**

(71) Applicant: **Omron Corporation**
**Kyoto-shi, Kyoto 600-8530 (JP)**

(72) Inventors:
• **EDA, Takayuki**
**Kyoto-shi**
**Kyoto 600-8530 (JP)**
• **KASAI, Kazuki**
**Kyoto-shi**
**Kyoto 600-8530 (JP)**
• **IMAI, Hiroshi**
**Kyoto-shi**
**Kyoto 600-8530 (JP)**
• **TAKATSUKA, Hiromasa**
**Kyoto-shi**
**Kyoto 600-8530 (JP)**
• **AITA, Fumiji**
**Kyoto-shi**
**Kyoto 600-8530 (JP)**

(74) Representative: **2K Patentanwälte Blasberg**
**Kewitz & Reichel**
**Partnerschaft mbB**
**Schumannstrasse 27**
**60325 Frankfurt am Main (DE)**

(54) **POWER TRADING MATCHING SYSTEM, POWER TRADING MATCHING METHOD AND POWER TRADING MATCHING PROGRAM**

(57)    This power trading matching system (10) is provided with a required power amount information acquisition unit (11), a utility customer information acquisition unit (12), a surplus power estimation unit (14), and a matching unit (15). The surplus power estimation unit (14) estimates the suppliable amount of surplus power on the basis of the amount of generated power, the amount of accumulated power, and the amount of consumed power during a prescribed time period of a utility customer B (30) acquired by the utility customer information acquisition unit (12). The matching unit (15) detects combinations of utility customers having matching conditions by comparing the information about the amount of surplus power suppliable from the utility customer B (30), estimated by the surplus power estimation unit (14), and the required power amount information of a utility customer A (20) acquired by the required power amount information acquisition unit (11).

FIG. 1

EP 3 422 282 A1

**Description**

Technical Field

The present invention relates to a power trading matching system, a power trading matching method, and a power trading matching program.

Background Art

In recent years, power generation devices (for example, a solar power generation device) that generate power using renewable energy is being utilized. In Japan, since the surplus power purchase system is enacted, it is possible to sell power generated by solar power generation devices, wind power generation devices, or the like to a power company.
Meanwhile, there are cases in which generated power cannot be sold to a power company. An example thereof includes a case in which a predetermined amount of power that can be purchased by a power company (hereinafter referred to as output curtailment) has been exceeded. Therefore, a customer may use a storage battery capable of temporarily storing power that cannot be sold.
However, when the power amount generated by the power generation device is larger than the remaining battery capacity of the storage battery, the power generated by the power generation device needs to be discarded in some cases.
For example, Patent Literature 1 discloses a power trading intermediation system capable of accommodating surplus power in a plurality of customers by matching information on the power amount, a time period, and a price in purchase power bidding with information on the power amount, the time period, and the price in selling power bidding.

Citation List

Patent Literature

Patent Literature 1: Japanese Laid-Open Publication No. 2004-229363 (Japanese Patent No. 3722123)

SUMMARY

However, the power trading intermediation system of the related art has the following problems.
That is, in the system disclosed in the above publication, by creating a plurality of matching combinations of power bids with respect to power bidding with a long time unit, the disadvantage of bidding by power generation company is resolved and a trading volume is increased.
However, this system is configured to directly accommodate the power generated by natural energy such as solar power generation in other customers. Therefore, there is no consideration of a case in which a customer includes a storage battery capable of storing a surplus amount (surplus power) of generated power.
The present invention is to provide a power trading matching system, a power trading matching method, and a power trading matching program capable of efficiently accommodating surplus power in a plurality of customers that own a power generation device and a storage battery.

(Means for solving Problem)

A power trading matching system according to the first disclosure is a power trading matching system for accommodating surplus power in a plurality of customers each of which owns a power generation device and a storage battery, the power trading matching system including: a required power amount information acquisition part, a customer information acquisition part, a surplus power estimation part, and a matching part. The required power amount information acquisition part acquires information about a power amount required in a predetermined time period by a first customer. The customer information acquisition part acquires information about the power generation device and the storage battery owned by a second customer, and a power consumption amount of the second customer. The surplus power estimation part estimates a surplus power amount that can be supplied at the second customer based on information about a generated power amount of the power generation device, the stored power amount in the storage battery, and the power consumption amount in the predetermined time period of the second customer acquired in the customer information acquisition part. The matching part collates the surplus power amount that can be supplied from the second customer estimated in the surplus power estimation part with the information about the required power amount of the first customer acquired by the required power amount information acquisition part and detects a combination of the first customer and the second customer between which trading may be established.

Here, the system for accommodating surplus power in a plurality of customers each of which owns a power generation device and a storage battery is constituted. Specifically, the first customer requiring the supply of power from outside in the predetermined time period is matched with the second customer assumed to generate surplus power based on the power amount generated by the power generation device, the stored power amount stored in the storage battery, and the power consumption amount in the predetermined time period.

Examples of the power generation devices owned by the first customer and the second customer include solar power generation devices, wind power generation devices, and geothermal power generation devices.

Further, the number of the second customers that supply the surplus power to the first customer may be one or may be plural.

Here, for the required power amount information acquired by the required power amount information acquisition part, demand conditions such as the power amount required to be supplied from outside, and the supply date and time may be directly inputted by the first customer. Alternatively, the required power amount information may be automatically acquired based on the change in the generated power amount of the power generation device, the stored power amount of the storage battery, and the life pattern or the power consumption amount of the first customer.

Further, the customer information acquired by the customer information acquisition part may be directly inputted as suppliable conditions from the second customer assumed to generate surplus power. Alternatively, the customer information may be automatically acquired as an estimated value of the generated power amount of the power generation device and the stored power amount of the storage battery owned by the second customer based on the information such as the weather forecast in the predetermined time period.

Various types of information acquired in the required power amount information acquisition part and the customer information acquisition part may be stored in a storage part provided inside the system or may be stored in an external server or the like.

The surplus power estimation part estimates the surplus power amount generated in the second customer in the predetermined time period based on the various types of information acquired by the customer information acquisition part. Specifically, the surplus power estimation part calculates a predicted generated power amount of the power generation device based on, for example, a weather forecast (a sunshine time, a wind speed, or the like) in the predetermined time period. The surplus power estimation part detects the stored power amount in the current storage battery and estimates the stored power amount of the storage battery in the predetermined time period. Further, the surplus output estimation part subtracts the predicted power consumption amount in the predetermined time period calculated based on a life pattern of the second customer, past data, or the like from the predicted generated power amount and the stored power amount of the storage battery. Accordingly, the surplus power estimation part estimates the surplus power amount generated in the second customer.

The matching part collates the demand conditions acquired in the required power amount information acquisition part with the surplus power amount in the second customer estimated in the surplus power estimation part, supply conditions thereof, and the like to detect a combination of the first customer requiring surplus power in the predetermined time period and the second customer generating the surplus power in the time period.

The number of combinations of the first customer and the second customer detected in the matching part may be one or may be plural.

Accordingly, in a case in which surplus power is generated in the second customer in a predetermined time period in which power is required in the first customer, it is possible to create a matching appropriate combination by collating the demand conditions in the first customer and the suppliable conditions in the second customer.

Therefore, it is possible to effectively utilize surplus power discarded at the second customer in the related art in a plurality of customers. As a result, it is possible to efficiently accommodate the surplus power in a plurality of customers that own a power generation device and a storage battery.

A power trading matching system according to the second disclosure is the power trading matching system according to the first disclosure, further comprising: a power transmission control part that transmits the surplus power from the second customer that is a supply source to the first customer that is a supply destination based on the combination of the first customer and the second customer detected by the matching part.

Here, the power transmission control part transmits the surplus power from the second customer that is a supply source to the first customer that is a supply destination based on the combination of the first customer and the second customer detected by the matching part.

Here, when there are a plurality of combinations of the first customers and the second customers detected in the matching part, the power transmission control part may select an optimal combination based on, for example, the power amount, the reward, or the loss occurred during power transmission included in a supply possibility condition of the second customer, and transmit the power.

Accordingly, it is possible to efficiently accommodate the surplus power among a plurality of customers each of which owns a power generation device and a storage battery.

A power trading matching system according to the third disclosure is the power trading matching system according to the first or second disclosure, further comprising: a storage part that stores the information acquired by the required power amount information acquisition part and the information acquired by the customer information acquisition part.

Here, the information acquired by the required power amount information acquisition part and the information acquired by the customer information acquisition part are stored in a storage part provided in the system.

Accordingly, it is possible to detect the combination of the first customer and the second customer using various types of information stored in the storage part, for example, each time a predetermined time elapses, and perform matching for power accommodating.

A power trading matching system according to the fourth disclosure is the power trading matching system according to any one of the first to third disclosures, wherein the surplus power estimation part estimates the generated power amount of the power generation device in the predetermined time period of the second customer based on information about a weather forecast.

Here, the information about the weather forecast is used to estimate the surplus power in the surplus power estimation part.

Accordingly, for example, in the case in which the power generation device is a solar power generation device, the generated power amount of the solar power generation device can be predicted using information about a sunshine time of a weather forecast. Further, for example, when the power generation device is a wind power generation device, the generated power amount of the wind power generation device can be predicted using information about a wind speed of a weather forecast.

A power trading matching system according to the fifth disclosure is the power trading matching system according to any one of the first to fourth disclosures, wherein the surplus power estimation part estimates the power consumption amount in the predetermined time period of the second customer based on data in which the power consumption amount according to a past life pattern has been recorded.

Here, data in which the power consumption amount according to the life pattern of the second customer has been recorded is used for estimation of the power consumption amount that is required for estimation of the surplus power in the surplus power estimation part.

Accordingly, it can be seen that, for example, when the second customer has a life pattern in which the power consumption amount at night is larger than that during the daytime, the power amount generated by the solar power generation device is large, and surplus power is highly likely to be generated in a time period during the daytime in which the power consumption amount is small. Therefore, it is possible to improve accuracy of the estimation of the power consumption amount by detecting a time period in which surplus power is easily generated for each customer.

A power trading matching system according to the sixth disclosure is the power trading matching system according to any one of the first to fifth disclosures, wherein the surplus power estimation part acquires the stored power amount of the storage battery at a current time to estimate the stored power amount of the storage battery in the predetermined time period of the second customer.

Here, the amount of stored power in the current storage battery is used for estimation of the surplus power in the surplus power estimation part.

Accordingly, for example, it is possible to perform estimation of the surplus power amount that can be supplied to the first customer in the predetermined time period using the stored power amount of the current power storage battery together with the estimated value of the generated power amount of the power generation device and the power consumption amount of the second customer in the predetermined time period.

A power trading matching system according to the seventh disclosure is the power trading matching system according to any one of the first to sixth disclosures, wherein the required power amount information acquisition part acquires information about the required power amount inputted by the first customer.

Here, the required power amount acquisition part acquires information on the required power amount inputted by the first customer.

Accordingly, it is possible to perform matching with the second customer that can supply the surplus power using information about the required power amount directly inputted from the first customer.

A power trading matching system according to the eighth disclosure is the power trading matching system according to any one of the first to seventh disclosures, wherein the required power amount information acquisition part acquires information including at least one of a power amount that the first customer desires to receive, a desired date and time of reception, a time period, a place, a unit price of power, and a reward.

Here, the various types of information acquired by the required power amount information acquisition part include information such as the power amount that the first customer desires to receive, the desired date and time of reception, the time period, the place, the unit price (¥/wh) of power, or the reward.

Accordingly, it is possible to perform matching with an optimal second customer using not only the power amount required by the first customer, but also information about the date and time at which that the second customer desires to receive the surplus power, the time period, the place of the second customer, the unit price of the surplus power, or the reward.

A power trading matching system according to the ninth disclosure is the power trading matching system according to any one of the first to eighth disclosures, wherein the customer information acquisition part acquires information about the power generation device and the storage battery inputted by the second customer.

Here, the information about the power generation device and the storage battery is inputted by the second customer as information about the surplus power.

An estimated generated power amount, etc. based on a type of power generation device, a power generation capacity, and a weather forecast, and the like is included as the inputted information of the power generation device. Further, information such as the stored power amount of a current storage battery or a full charge capacity of the storage battery may be included as the inputted information of the storage battery.

Accordingly, it is possible to estimate the surplus power using the information of the power generation device and the storage battery directly inputted from the second customer.

A power trading matching system according to a tenth disclosure is the power trading matching system according to any one of the first to ninth disclosures, wherein when there are a plurality of second customers of which trading is established with the first customer, the matching part selects a combination of the first customer and the second customer based on a unit price of power that is transmitted from the second customer to the first customer.

Here, a unit price (¥/wh) for supply of the surplus power is used as a selection condition when there are a plurality of second customers of which trading is established with the first customer.

The information about the unit price may be inputted by the second customer on the side of supplying the surplus power or reward information automatically set based on a change in the surplus power amount of at the plurality of the second customers may be used.

Accordingly, for example, the second customer that supplies the surplus power with the lowest unit price among the plurality of the second customers capable of supplying the power required by the first customer can be selected and matched.

A power trading matching system according to the eleventh disclosure is the power trading matching system according to any one of the first to tenth disclosures, wherein when there are the plurality of second customers of which trading is established with the first customer, the matching part selects a combination of the first customer and the second customer based on a magnitude of a power transmission loss when power is transmitted from the second customer to the first customer.

Here, the magnitude of the loss occurred during transmission of the surplus power is used as the selection condition when there are a plurality of the second customers of which the trading is established with the first customer.

For the information on the loss occurred during transmission of the surplus power, map information including, for example, the distance from the second customer on the side supplying the surplus power to the first customer, and the position of the first customer and the second customer may be used.

Accordingly, for example, the second customer that supplies the surplus power with the smallest power transmission loss (a short distance) among the plurality of second customers capable of supplying the power required by the first customer can be selected and matched. As a result, the surplus power supplied from the second customer can be efficiently received by the first customer.

A power trading matching method according to the twelfth disclosure is a power trading matching method for accommodating surplus power in a plurality of customers each of which owns a power generation device and a storage battery, the power trading matching method including: a required power amount information acquisition step, a customer information acquisition step, a surplus power estimation step, and a matching step. The required power amount information acquisition step includes acquiring information about a power amount required in a predetermined time period by a first customer. The customer information acquisition step includes acquiring information about the power generation device and the storage battery owned by a second customer, and a power consumption amount of the second customer. The surplus power estimation step includes estimating a surplus power amount that can be supplied at the second customer based on information about a generated power amount of the power generation device, a stored power amount in the storage battery, and a power consumption amount in the predetermined time period of the second customer acquired in the customer information acquisition step. The matching step includes collating a surplus power amount that can be supplied from the second customer estimated in the surplus power estimation step with the information about the required power amount of the first customer acquired in the required power amount information acquisition step and detecting a combination of the first customer and the second customer between which trading is established.

Here, a method including a step for accommodating surplus power in a plurality of customers each of which owns a power generation device and a storage battery is constituted. Specifically, the first customer requiring the supply of power from outside in the predetermined time period is matched with the second customer assumed to generate surplus power based on the power amount generated by the power generation device, the stored power amount stored in the storage battery, and the power consumption amount in the predetermined time period.

Examples of the power generation devices owned by the first customer and the second customer include solar power generation devices, wind power generation devices, and geothermal power generation devices.

Further, the number of second customers that supply the surplus power to the first customer may be one or may be plural.

Here, for the required power amount information acquired by the required power amount information acquisition step, demand conditions such as the power amount required to be supplied from outside, and the supply date and time may be directly inputted by the first customer. Alternatively, the required power amount information may be automatically acquired based on the past data such as change in the generated power amount of the power generation device, the stored power amount of the storage battery, and the life pattern or the power consumption amount of the first customer.

Further, the customer information acquired in the customer information acquisition step may be directly inputted as suppliable conditions from a second customer assumed to generate surplus power. Alternatively, the customer information may be automatically acquired as an estimated value of the generated power amount of the power generation device and the stored power amount of the storage battery owned by the second customer based on the information such as the weather forecast in the predetermined time period.

Various types of information acquired in the required power amount information acquisition step and the customer information acquisition step may be stored in a storage part provided inside the system or may be stored in an external server or the like.

Further, in the surplus power estimation step, the surplus power amount generated in the second customer in the predetermined time period is estimated based on the various types of information acquired in the customer information acquisition step. Specifically, in the surplus power estimation step, a predicted generated power amount in the power generation device is calculated based on, for example, the weather forecast (a sunshine time, a wind speed, or the like) in the predetermined time period. In the surplus power estimation step, the stored power amount in the current storage battery is detected and the stored power amount of the storage battery in the predetermined time period is estimated. Further, in the surplus output estimation step, the predicted power consumption amount in the predetermined time period calculated based on the life pattern of the second customer, past data, or the like is subtracted from the predicted generated power amount and the stored power amount of the storage battery. Accordingly, in the surplus power estimation step, the surplus power amount generated in the second customer is estimated.

In the matching step, the demand conditions acquired in the required power amount information acquisition step is collated with the surplus power amount in the second customer estimated in the surplus power estimation step, the supply conditions, or the like to detect a combination of a first customer requiring surplus power in the predetermined time period and the second customer generating surplus power in the predetermined time period.

The number of combinations of the first customer and the second customer detected in the matching step may be one or may be plural.

Accordingly, in a case in which surplus power is generated in the second customer in a predetermined time period in which power is required in the first customer, it is possible to create a matching appropriate combination by collating the demand conditions in the first customer and the suppliable conditions in the second customer.

Therefore, it is possible to effectively utilize surplus power discarded at the second customer in the related art in a plurality of customers. As a result, it is possible to efficiently accommodate the surplus power among a plurality of customers each of which owns a power generation device and a storage battery.

A power trading matching program according to a thirteenth disclosure is a power trading matching program for accommodating surplus power in a plurality of customers each of which owns a power generation device and a storage battery, the power trading matching program causing a computer to execute a power trading matching method including: a required power amount information acquisition step, a customer information acquisition step, a surplus power estimation step, and a matching step. The required power amount information acquisition step includes acquiring information about the power amount required in a predetermined time period by a first customer. The customer information acquisition step includes acquiring information about the power generation device and the storage battery owned by a second customer, and a power consumption amount of the second customer. The surplus power estimation step includes estimating a surplus power amount that can be supplied at the second customer based on information about a generated power amount of the power generation device, a stored power amount in the storage battery, and a power consumption amount in the predetermined time period of the second customer acquired in the customer information acquisition step. The matching step includes collating the surplus power amount that can be supplied from the second customer estimated in the surplus power estimation step with the information about the required power amount of the first customer acquired in the required power amount information acquisition step and detecting a combination of the first customer and the second customer between which trading is established.

Here, a program that causes a computer to execute a method including a step for accommodating surplus power in a plurality of customers each of which owns a power generation device and a storage battery is constituted. Specifically, the first customer requiring the supply of power from outside in the predetermined time period is matched with the second customer assumed to generate surplus power based on the power amount generated by the power generation device, the stored power amount stored in the storage battery, and the power consumption amount in the predetermined time period.

Examples of the power generation devices owned by the first customer and the second customer include solar power generation devices, wind power generation devices, and geothermal power generation devices.

Further, the number of second customers that supply the surplus power to the first customer may be one or may be plural.

Here, for the required power amount information acquired by the required power amount information acquisition part, demand conditions such as the power amount required to be supplied from outside, and the supply date and time may be directly inputted by the first customer. Alternatively, the required power amount information may be automatically acquired based on past data such as change in the generated power amount of the power generation device, the stored power amount of the storage battery, and the life pattern or the power consumption amount of the first customer.

Further, the customer information acquired in the customer information acquisition step may be directly input as suppliable conditions from the second customer assumed to generate surplus power. Alternatively, the customer information may be automatically acquired as an estimated value of the generated power amount of the power generation device and the stored power amount of the storage battery owned by the second customer based on the information such as the weather forecast in the predetermined time period.

Various types of information acquired in the required power amount information acquisition step and the customer information acquisition step may be stored in a storage part provided inside the system or may be stored in an external server or the like.

Further, in the surplus power estimation step, the surplus power amount generated in the second customer in the predetermined time period is estimated based on the various types of information acquired in the customer information acquisition step. Specifically, in the surplus power estimation step, a predicted generated power amount in the power generation device is calculated based on, for example, weather forecast (a sunshine time, a wind speed, or the like) in the predetermined time period. In the surplus power estimation step, the stored power amount in the current storage battery is detected and the stored power amount of the storage battery in the predetermined time period is estimated. Further, in the surplus output estimation step, the predicted power consumption amount in the predetermined time period calculated based on the life pattern of the second customer, past data, or the like is subtracted from the predicted generated power amount and the stored power amount of the storage battery. Accordingly, in the surplus power estimation step, the surplus power amount generated in the second customer is estimated.

In the matching step, the demand conditions acquired in the required power amount information acquisition step is collated with the surplus power amount in the second customer estimated in the surplus power estimation step, the supply conditions, or the like to detect a combination of the first customer requiring surplus power in the predetermined time period and the second customer generating surplus power in the predetermined time period.

The number of combinations of the first customer and the second customer detected in the matching step may be one or may be plural.

Accordingly, in a case in which surplus power is generated in the second customer in a predetermined time period in which power is required in the first customer, it is possible to create a matching appropriate combination by collating the demand conditions in the first customer and the suppliable conditions in the second customer.

Therefore, it is possible to effectively utilize surplus power discarded at the second customer in the related art in a plurality of customers. As a result, it is possible to efficiently accommodate the surplus power among a plurality of customers that own the power generation device and the storage battery.

(Advantageous Effects of Invention)

According to the power trading matching system of the present invention, it is possible to efficiently accommodate the surplus power among a plurality of customers that own a power generation device and a storage battery.

BRIEF DESCRIPTION OF DRAWINGS

FIG. 1 is a block diagram illustrating a relationship between a power trading matching system and a plurality of customers according to an embodiment of the present invention.
FIG. 2 is a graph showing change in a power situation in customer A requiring surplus power in the power trading matching system of FIG. 1.
FIG. 3 is a graph showing a change in a power situation in customer B generating surplus power in the power trading matching system of FIG. 1.
FIG. 4 is a flowchart showing a flow from matching between a plurality of customers in power trading matching system in FIG. 1 to power transmission control.

FIG. 5 is a flowchart showing a flow of matching when there are a plurality of customers generating surplus power in matching between a plurality of customers in the power trading matching system of FIG. 1.

FIG. 6 is a diagram illustrating information (required power amount, a date and time, a place, a desired unit price, or the like) regarding the required power amount inputted from customer A according to the flowchart of FIG. 4.

FIG. 7 is a diagram illustrating a plurality of customer candidates that are selected according to the flowchart of FIG. 5.

FIG. 8 is a diagram illustrating a customer selected by the power trading matching system of FIG. 1.

FIG. 9 is a diagram illustrating customers finally selected by the power trading matching system of FIG. 1.

FIG. 10 is a block diagram illustrating a relationship between a power trading matching system and a plurality of customers according to another embodiment of the present invention.

FIG. 11 is a flowchart showing a flow when estimation of surplus power at customer B generating the surplus power is performed in the power trading matching system of FIG. 10.

FIG. 12 is a block diagram illustrating a relationship between a power trading matching system and a plurality of customers according to still another embodiment of the present invention.

FIG. 13 is a block diagram illustrating a relationship between a power trading matching system and a plurality of customers according to still another embodiment of the present invention.

## DESCRIPTION OF EMBODIMENTS

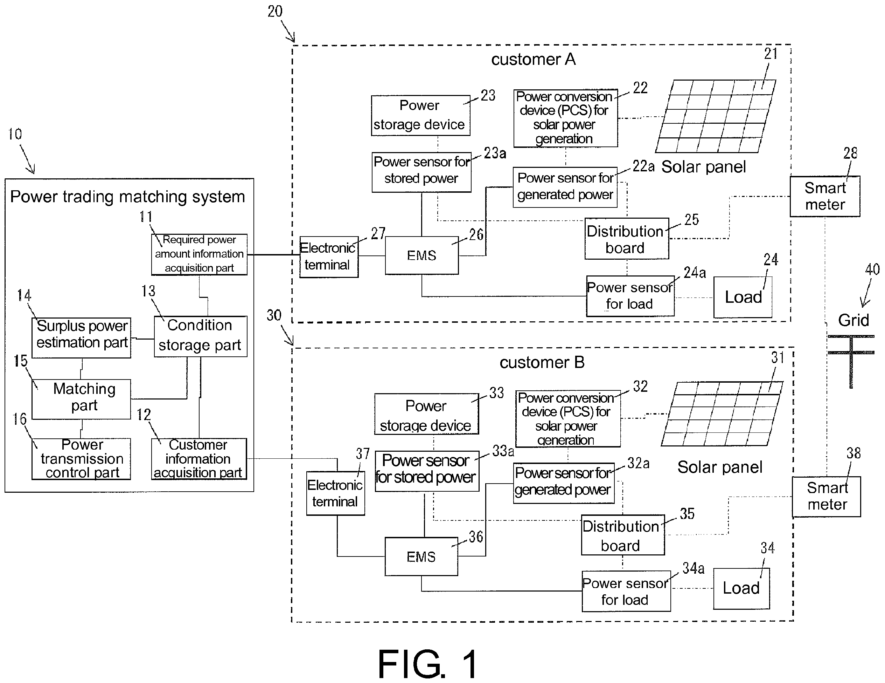

A power trading matching system, a power trading matching method, and a power trading matching program according to an embodiment of the present invention will be described with reference to FIGs. 1 to 9.

Here, a customer A (a first customer) 20, 120 that appears in the following description means a customer that owns a power generation device (a solar panel 21) and a storage battery (a power storage device 23), and needs power supply from outside since power is insufficient in a predetermined time period. Further, a customer B (a second customers) 30, 130 means a customer that owns a power generation device (a solar panel 31) and a storage battery (a power storage device 33), and surplus power will be generated in a predetermined time period is predicted. The customers A and B may exchange the role requiring power and the role supplying surplus power.

Further, the customer is, for example, an individual, a corporation, or an organization that makes a contract with a power company and uses power that is supplied from the power company through a grid 50 (see FIG. 1). For example, the customer can include a general household (a detached house or a condominium), a company (an office, a factory, a facility, or the like), a local government, a national agency, or the like. Further, the customer may include a customer that obtains power through private power generation, and a customer that has realized a Zero Energy Building (ZEB).

Further, in Embodiments 1 and 2 below, for convenience of description, one customer A 20 of requiring power and one customer B 30 of generating surplus power are described. However, in the present invention, a combination of the customer A 20 and the customer B 30 is not limited to a one-to-one basis, and there may be a plurality of customers B 30 capable of supplying surplus power to one customer A 20.

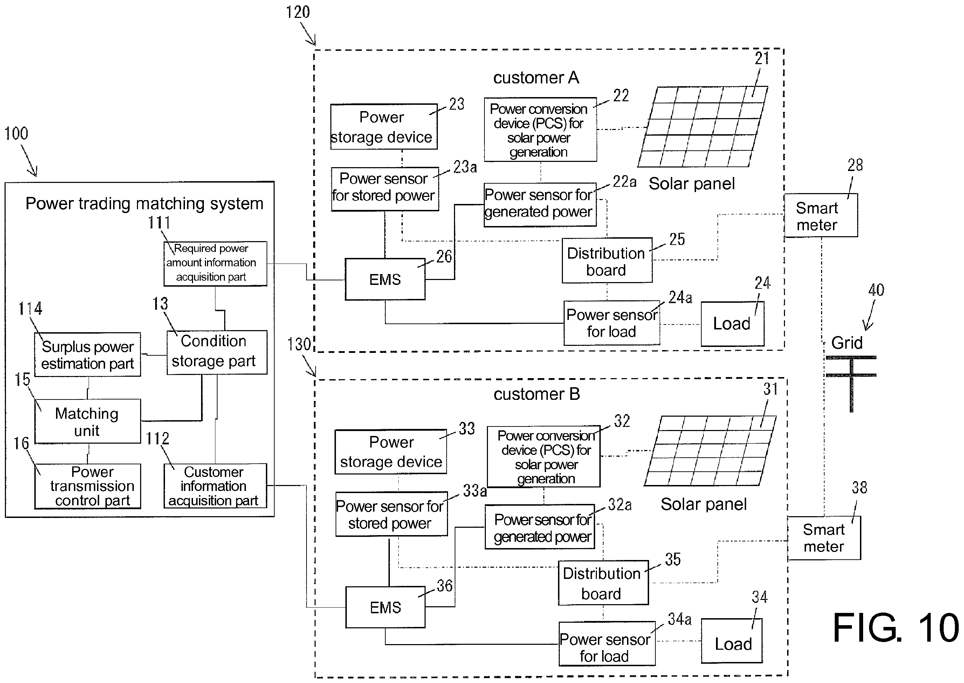

Further, in Embodiments 1 and 2 below, a grid 40 (see FIGs. 1 and 10) means a power grid that supplies power supplied from the power company to each customer.

In Embodiments 1 and 2 below, the smart meters 28 and 38 (see FIGs. 1 and 10) mean measurement devices that are installed in respective customers, measure the amount of generated power, the amount of stored power, and the amount of power consumption, and transmit measurement results to the power company or the like using a communication function. By installing the smart meters 28 and 38, the power company can accurately ascertain a real-time power situation in respective customers A 20 and B 30, and can automate meter reading work that is executed at predetermined intervals.

Further, in Embodiments 1 and 2 below, loads 24 and 34 (see FIGs. 1 and 10) mean, for example, power consuming bodies such as air conditioners, refrigerators, microwave ovens, IH cooking heaters, or televisions when the customer is a general household. Further, for example, when the customer is a company (a factory or the like), the loads mean power consuming body such as various facilities or air conditioning equipment installed in the factory.

Further, in Embodiments 1 and 2 below, the energy management system (EMS) 26 and 36 (see FIGs. 1 and 10) mean systems that are installed in respective customers and provided to reduce the amount of power consumption in the respective customers. The EMSs 26 and 36 are connected to the power trading matching system 10 through a network.

(Embodiment 1)

The power trading matching system 10 according to the embodiment is a system in which surplus power is accommodated in a plurality of customers that own a power generation device and a storage battery, and performs accommodation of surplus power between the customer A (the first customer) 20 and the customer B (the second customer) 30, as illustrated in FIG. 1.

Specifically, the power trading matching system 10 matches the customer A 20 with an optimal customer from among a plurality of the customers B 30 that generate surplus power based on the information on the required power amount power inputted from the customer A 20 that requires power supplied from outside in a predetermined time period. The power trading matching system 10 performs power transmission control so that the surplus power is supplied between the matched customers (specifically, from the customer B 30 to the customer A 20).

In this embodiment, electronic terminals 27 and 37 (see FIG. 1) are respectively installed in the customers A and B, and mean a personal computer (PC), a tablet terminal, a smartphone, a mobile phone, or the like to which information on the required power amount and information on the surplus power amount are input.

A solid line connecting the respective components illustrated in FIG. 1 indicates a flow of information such as data, and a dash-dotted line indicates a flow of electricity.

Further, a configuration of the power trading matching system 10 of the embodiment will be described below in detail.

(Customer A)

As illustrated in FIG. 1, the power trading matching system 10 of the embodiment is connected to the electronic terminal 27 owned by the customer A 20 that requires power in a predetermined time period.

The customer A 20 inputs information on the power amount predicted to be necessary (the required power amount) in a predetermined time period to the power trading matching system 10 through the electronic terminal 27. As illustrated in FIG. 1, the customer A 20 includes a solar panel (a power generation device) 21, a power conversion device (PCS) for solar power generation 22, a power sensor for generated power 22a, a storage device (a storage battery) 23, a power sensor for stored power 23a, the load 24, a load power sensor 24a, a distribution board 25, the energy management system (EMS) 26, the electronic terminal 27, and the smart meter 28.

The solar panel (power generation device) 21 generates electricity using a photovoltaic effect that utilizes the light energy of sunlight, and is installed on a roof of the customer A 20, or the like. The amount of the generated power in the solar panel 21 can be predicted based on information on a sunshine time from weather forecast.

As illustrated in FIG. 1, the power conversion device for solar power generation (power conditioning system (PCS)) 22 is connected to the solar panel 21 and converts a direct current generated in the solar panel 21 into an alternating current.

As illustrated in FIG. 1, the power sensor for generated power 22a is connected to the power conversion device for solar power generation 22, and measures the power amount generated by the solar panel 21. The power sensor for generated power 22a transmits a measurement result (the generated power amount) to the EMS 26.

The power storage device (storage battery) 23 is provided to temporarily store the surplus power that cannot be consumed by the load 24 from the power generated by the solar panel 21. Accordingly, even when the amount of the consumed power by the load 24 is small in a time period during the daytime in which power is generated by the solar panel 21, the surplus power is stored in the power storage device 23, thereby preventing wasting of discarding the generated power.

As illustrated in FIG. 1, the power sensor for stored power 23a is connected to the power storage device 23 and measures the power amount stored in the power storage device 23. The power sensor for stored power 23a transmits a measurement result (the stored power amount) to the EMS 26.

As described above, the load 24 is a power consumption body such as home appliances such as air conditioners or refrigerators in a general household, or facilities or air conditioning devices in a factory, and consumes the power supplied from the grid 40, the power generated by the solar panel 21, and the power stored in the power storage device 23.

As illustrated in FIG. 1, the load power sensor is connected to the load 24, and measures the power amount that is consumed by the load 24. The load power sensor transmits a measurement result (the consumed power amount) to the EMS 26.

As illustrated in FIG. 1, the distribution board 25 is connected to the power sensor for generated power 22a, the power sensor for stored power 23a, the power sensor for a load 24a, and the smart meter 28. The distribution board 25 supplies the power generated by the solar panel 21 and the power stored in the power storage device 23 to the load 24. Further, the distribution board 25 supplies the surplus power generated based on the time period to the grid 40 via the smart meter 28. Accordingly, the customer A 20 can sell the surplus power to the power company.

The energy management system (EMS) 26 is provided to reduce the consumed power amount at the customer A 20, as described above, and the EMS 26 is connected to the respective sensors 22a, 23a, and 24a, as illustrated in FIG. 1. Further, the EMS 26 is connected to the electronic terminal 27. Further, the EMS 26 efficiently supplies the load 24 with the generated power of the solar panel 21 and the stored power amount in the power storage device 23 using detection results received from the sensors 22a, 23a, and 24a. Accordingly, the consumption amount of the power supplied from the grid 40 can be suppressed, and the power cost at the customer A 20 can be effectively reduced.

As described above, the electronic terminal 27 is a PC, a tablet terminal, a smartphone, or the like owned by the customer A 20. In the embodiment, the information on the required power amount in a predetermined time period is inputted from the customer A 20 to the electronic terminal 27. As illustrated in FIG. 1, the electronic terminal 27 is connected to the power trading matching system 10 (a required power amount information acquisition part 11) via a communication line.

The information about the required power amount input via the electronic terminal 27 includes information such as the power amount (kwh) required by the customer A 20 in a predetermined time period, a date and time in the predetermined time period, a position of the customer A 20 (an address or the like), desired rewards for the supplying power, and the like.

As described above, the smart meter 28 measures the power amount generated by the solar panel 21 owned by the customer A 20, the stored power amount in the power storage device 23, and the consumed power amount by the load 24. As illustrated in FIG. 1, the smart meter 28 is connected to the sensors 22a, 23a, and 24a via the distribution board 25. Further, the smart meter 28 has a communication function, and transmits information about the generated power amount , the stored power amount, and the consumed power amount at the customer A 20 to the power company.

The embodiment describes that the customer A 20 desires supply of surplus power from outside in a predetermined time period. Therefore, at the customer A 20, it is assumed that the power consumption of the load 24 is greater than a sum of the generated power of the solar panel 21 and the stored power amount in the power storage device 23 in the predetermined time period.

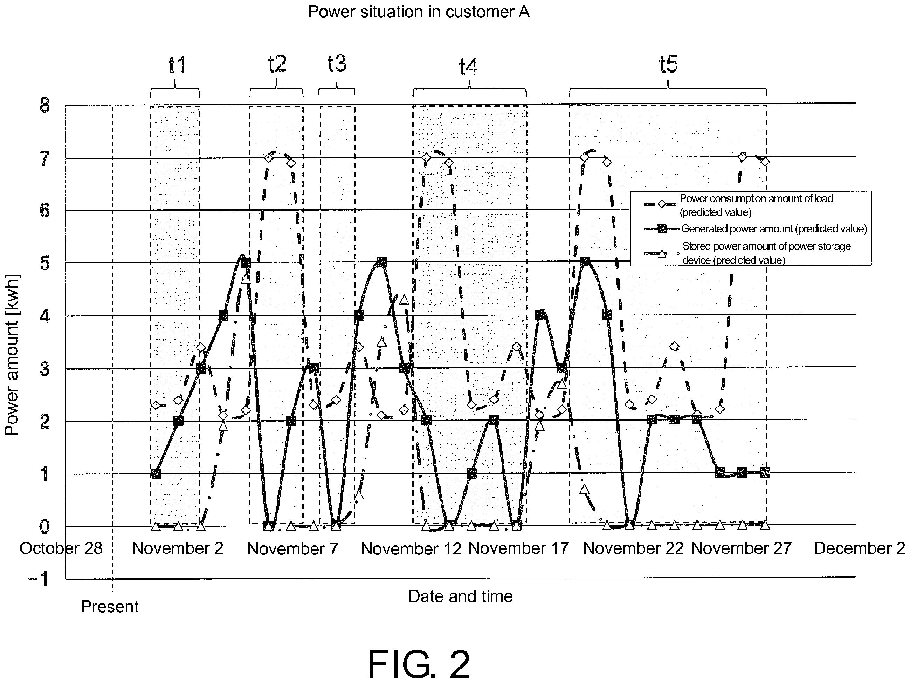

That is, as illustrated in FIG. 2, it is predicted that the estimated value of the generated power amount(solid line), the stored power amount (dash-dotted line), and the power consumption amount (dotted line) at a predetermined date and time fluctuate at the customer A 20.

Here, in a graph of FIG. 2, the horizontal axis indicates the date and time, and the vertical axis indicates the power amount (kwh). Temporal change in the power consumption amount, the generated power amount, and the stored power amount of the power storage device at the customer A 20 is shown.

Specifically, as for the generated power amount (solid line) in the graph of FIG. 2 shows a change in an estimated value of the amount of generated power of the solar panel 21. The stored power amount (dash-dotted line) indicates a change in an estimated value of the stored power amount in the power storage device 23 using the stored power amount of the current power storage device 23 and the estimated value of the generated power amount. The power consumption amount (dotted line) indicates a change in an estimated value of the power consumption amount of at the customer A 20 using information about change in the past power consumption amount such as a life pattern of the customer A 20.

As a result, at the customer A 20, since the load power-consumption amount of exceeds the sum of the generated power amount and the stored power amount of the storage battery in time periods t1, t2, t3, t4, and t5 as illustrated in FIG. 2, it is estimated that these are situations that the power supply from outside is required. Therefore, the customer A 20 may input the demand conditions via the electronic terminal 27 so that the surplus power can be supplied from the other customer B 30 in the time periods t1 to t 5.

(Customer B)

As illustrated in FIG. 1, the power trading matching system 10 of the embodiment is connected to the electronic terminal 37 owned by the customer B 30 that is estimated to generate surplus power in a predetermined time period.

The customer B 30 inputs information about the surplus power amount predicted to be generated in a predetermined time period to the power trading matching system 10 via the electronic terminal 37. As illustrated in FIG. 1, the customer B 30 includes a solar panel (power generation device) 31, a power conversion device (PCS) 32 for solar power generation, a power sensor 32a for generated power, a storage device (storage battery) 33, a power sensor 33a for stored power, a load 34, a power sensor for the load 34a, a distribution board 35, an energy management system (EMS) 36, the electronic terminal 37, and a smart meter 38.

The solar panel (power generation device) 21 is a device that generates electricity using a photovoltaic effect that utilizes light energy of sunlight, similar to the solar panel 21 of the customer A 20, and is installed at the roof of the customer A 20 or the like. The amount generated power of the solar panel 21 can be predicted based on information about a sunshine time from the weather forecast.

As illustrated in FIG. 1, the power conversion device for solar power generation (power conditioning system (PCS)) 32 is connected to the solar panel 31 and converts a direct current generated in the solar panel 31 into an alternating current.

As illustrated in FIG. 1, the power sensor for generated power 32a is connected to the power conversion device for solar power generation 32, and measures the power amount generated by the solar panel 31. The power sensor for generated power 32a transmits a measurement result (generated power amount) to the EMS 26.

The power storage device (storage battery) 33 is provided to temporarily store the surplus power that cannot be consumed by the load 34 among the power generated by the solar panel 31. Accordingly, even when the consumed power amount in the load 34 is small in a time period during the daytime in which the power is generated by the solar panel 31, the surplus power is stored in the power storage device 33, thereby preventing wasting of discarding the generated power.

As illustrated in FIG. 1, the power sensor for stored power 33a is connected to the power storage device 33 and measures the power amount stored in the power storage device 33. The power sensor for stored power 33a transmits a measurement result (amount of stored power) to the EMS 36.

As described above, the load 34 is a power consumption body such as a home appliance such as the air conditioner or the refrigerator in the general household, or a facility or an air conditioning device in a factory, and consumes the power that is supplied from the grid 40, the power generated by the solar panel 31, and the power stored in the power storage device 33.

As illustrated in FIG. 1, the power sensor for a load 34a is connected to the load 34, and measures the power amount consumed by the load 34. The power sensor for a load 34a transmits a measurement result (amount of consumed power) to the EMS 26.

As illustrated in FIG. 1, the distribution board 35 is connected to the power sensor for generated power 32a, the power sensor for stored power 33a, the power sensor for a load 34a, and the smart meter 38. The distribution board 25 supplies the power generated by the solar panel 31 and the power stored in the power storage device 33 to the load 34. Further, the distribution board 35 supplies the surplus power generated according to the time period to the grid 40 via the smart meter 38. Accordingly, the customer B 30 can sell the surplus power to the power company.

The energy management system (EMS) 26 is provided to reduce the amount of consumed power at the customer B 30, as described above, and is connected to the respective sensors 32a, 33a, and 34a, as illustrated in FIG. 1. Further, the EMS 26 is connected to the electronic terminal 37. Further, the EMS 26 efficiently supplies the load 34 with the generated power of the solar panel 31 and the stored power amount in the power storage device 33 by using the detection results received from the respective sensors 32a, 33a, and 34a. Accordingly, it is possible to effectively reduce a power cost at the customer B 30 by suppressing the power consumption amount that is supplied from the grid 40.

As described above, the electronic terminal 37 is a PC, a tablet terminal, a smartphone, or the like owned by the customer B 30. In the embodiment, the information about the surplus power amount in the predetermined time period is input from the customer B 30 to the electronic terminal 37. As illustrated in FIG. 1, the electronic terminal 37 is connected to the power trading matching system 10 (the customer information acquisition part 12) via a communication line.

The information about the surplus power amount inputted via the electronic terminal 37 includes information such as the surplus power amount (kwh) estimated to be suppliable in the predetermined time period by the customer B 30, the date and time of the predetermined time period, a place (an address or the like) of the customer B 30, and desired reward, etc. for the supply power.

As described above, the smart meter 38 measures the generated power amount of the solar panel 31 owned by the customer B 30, the stored power amount in the power storage device 33, and the consumed power amount of the load 34. As illustrated in FIG. 1, the smart meter 28 is connected to the respective sensors 32a, 33a, and 34a via the distribution board 35. Further, the smart meter 38 has a communication function, and transmits information about the generated power amount, the stored power amount and the consumed power amount at the customer B 30 to the power company.

In the embodiment, the customer B 30 is described as the one supplying the surplus power to the outside in a predetermined time period. Therefore, in the customer B 30, it is assumed that a sum of the generated power of the solar panel 31 and the stored power amount of the power storage device 33 is greater than the power consumption amount of the load 34 in the predetermined time period.

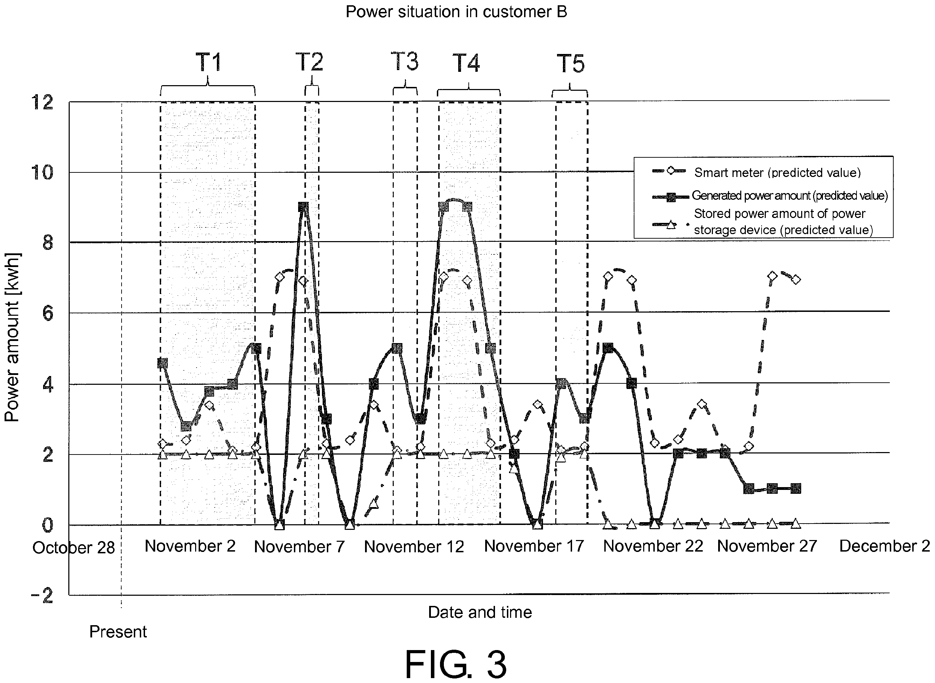

That is, at the customer B 30, it is predicted that estimated values of the generated power amount(solid line), the stored power amount (dash-dotted line), and the power consumption amount (dotted line) fluctuate at a predetermined date and time as illustrated in FIG. 3.

Here, in a graph of FIG. 3, the horizontal axis indicates the date and time, and the vertical axis indicates the power amount (kwh). A temporal change of the power consumption amount, the generated power amount, and the stored power amount of the power storage device at the customer B 30 is shown.

Specifically, the generated power amount (solid line) in the graph of FIG. 3 indicates a change in the estimated value of the generated power amount of the solar panel 31 using information about the weather forecast (sunshine time). The stored power amount (dash-dotted line) indicates a change in an estimated value of the stored power amount of the power storage device 33 using the stored power amount of the current power storage device 33 and the estimated value of the generated power amount. The power consumption amount (dotted line) indicates a change in an estimated value of the power consumption amount at the customer B 30 using the change information regarding the power consumption amount in the past such as a life pattern of the customer B 30.

As a result, at the customer B 30, since a sum of the generated power amount and the stored power amount of the storage battery exceeds the power consumption amount of the load in time periods T, T2, T3, T4, and T5 as illustrated in FIG. 3, it is estimated that it is a situation that the surplus power can be supplied to the outside. Therefore, the customer B 30 may input supply conditions via the electronic terminal 37 to supply the surplus power to the other customers A 20 in the time periods T1 to T5.

(Configuration of Power Trading Matching System 10)

The power trading matching system 10 of the embodiment is a system for accommodating the surplus power generated in the customer B 30 among a plurality of customers with respect to the customer A 20. As illustrated in FIG. 1, the power trading matching system 10 includes a required power amount information acquisition part 11, a customer information acquisition part 12, a condition storage part (storage part) 13, a surplus power estimation part 14, a matching part 15, and a power transmission controller 16.

As illustrated in FIG. 1, the required power amount information acquisition part 11 acquires information about the required amount of power from the customer A 20 via the electronic terminal 27.

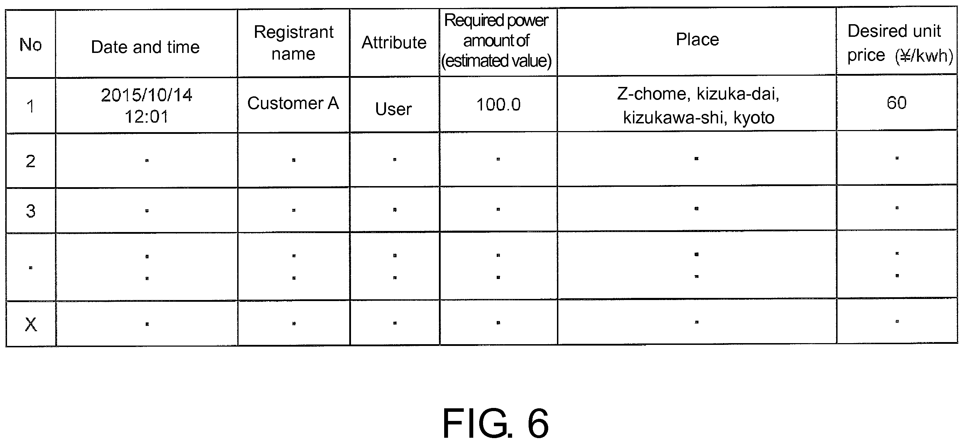

Here, the information about the required power amount inputted from the customer A 20 includes information such as the power amount (kwh) required by the customer A 20 in a predetermined time period, the date and time of the predetermined time period, the place (an address or the like) of the customer A 20, desired reward, etc. for supply power, as described above (see FIG. 6). That is, demand conditions of power required by the customer A 20 is acquired in the required power amount information acquisition part 11.

As illustrated in FIG. 1, the customer information acquisition part 12 acquires information about the surplus power amount from the customer B 30 via the electronic terminal 37.

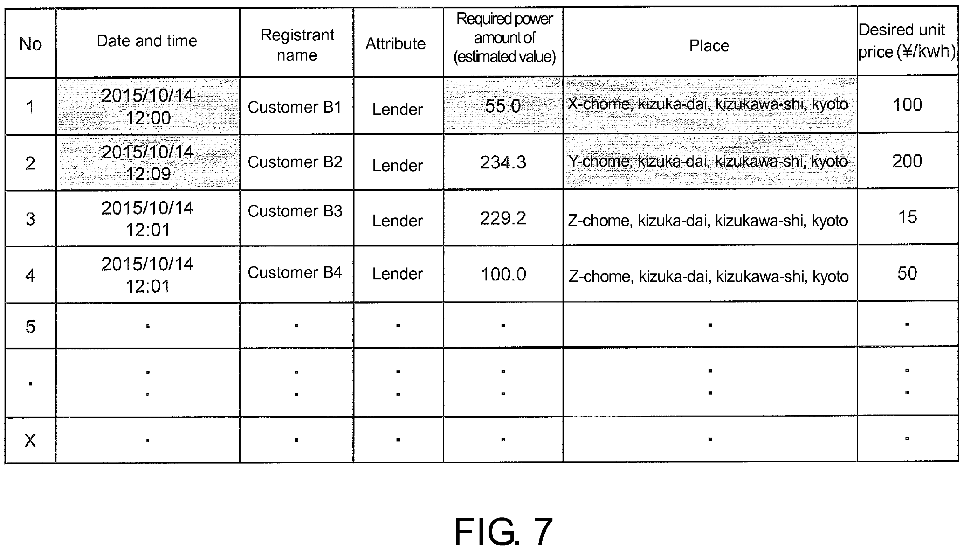

Here, the information about the surplus power amount inputted from the customer B 30 includes information such as the surplus power amount (kwh) estimated to be able to be supplied by the customer B 30 in the predetermined time period, the date and time of the predetermined time period, the position (address or the like.) of the customer B 30, the desired reward, etc. for the supplied power, as described above (see FIG. 7). That is, supply conditions of the surplus power that can be supplied at the customer B 30 is acquired in the customer information acquisition part 12.

As illustrated in FIG. 1, the condition storage part (storage part) 13 is connected to the required power amount information acquisition part 11 and the customer information acquisition part 12. The condition storage part 13 stores the demand conditions of the power of the customer A 20 acquired by the required power amount information acquisition part 11 and the supply conditions of the surplus power of the customer B 30 acquired by the customer information acquisition part 12.

The surplus power estimation part 14 is connected to the condition storage part 13, as illustrated in FIG. 1. The surplus power estimation part 14 estimates the surplus power amount in a predetermined time period based on the information about the generated power amount, the stored power amount, and the power consumption amount of the customer B 30 included in the supply conditions of the surplus power stored in the condition storage part 13.

Specifically, the surplus power estimation part 14 obtains an estimated value of the surplus power amount from the supply conditions of the surplus power inputted by the customer B 30.

When the estimated value of the surplus power amount in the predetermined time period is inputted by the customer B 30, the surplus power estimation part 14 can use the input estimated value as it is.

As illustrated in FIG. 1, the matching part 15 refers to the demand conditions of the power of the customer A 20 and the supply conditions of the surplus power of the customer B 30 to detect a combination that satisfies the respective conditions.

Here, the combination of the customer A 20 and the customer B 30 detected by the matching part 15 is not limited to one set, and when there are a plurality of combinations that satisfy the condition, a combination of a plurality of customers may also be detected as candidates.

When there are a plurality of combinations that satisfy the condition, the matching part 15 narrows down a final combination, for example, by adding conditions such as a reward for surplus power supply, a loss during the power transmission.

As illustrated in FIG. 1, the power transmission control part 16 transmits the surplus power among a plurality of customers based on the combination of the customer A 20 and the customer B 30 detected by the matching part 15. Specifically, when the predetermined time period is reached, the power transmission control part 16 supplies power from the customer B 30 that has generated the surplus power to the customer A 20 that requires the power.

Accordingly, the customer A receives the supply of the surplus power from the customer B 30 in the predetermined time period, such that the customer A does not need to purchase power from the power company via the grid 40. Therefore, according to the reward for the surplus power, it is possible to reduce electricity rates of the customer A 20. The consumer B 30 can effectively utilize the surplus power discarded in the past among a plurality of the customers.

<Power Trading Matching Method>

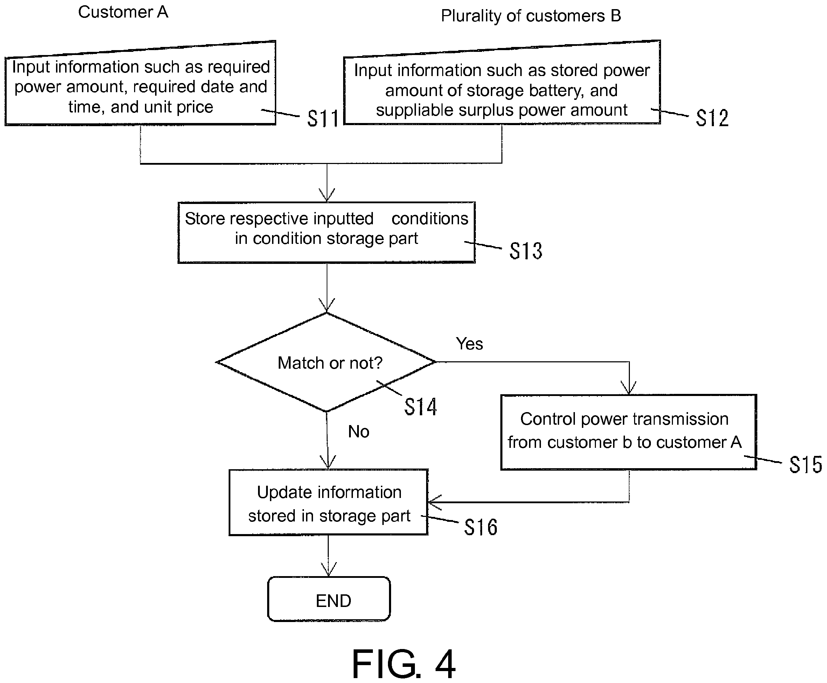

The power trading matching system 10 of the embodiment performs a power trading matching method according to the flowchart illustrated in FIG. 4.

That is, in step S11, demand information such as the required power amount in the predetermined time period, the required date and time, and the reward, etc. for supply of surplus power is inputted by the customer A20 via the electronic terminal 27. In the power trading matching system 10, the required power amount information acquisition part 11 acquires the demand information inputted by the customer A 20.

Meanwhile, in step S12, the supply information about the surplus power (the stored power amount of the storage battery, the date and time at which the surplus power can be supplied, the desired reward for surplus power, and the like) is inputted by the customer B 30 via the electronic terminal 37. In the power trading matching system 10, the customer information acquisition part 12 acquires the supply information input by the customer B 30.

Then, in step S13, the demand conditions and the supply conditions inputted from the customers A20 and B30 in step S11 and step S12 and acquired in the required power amount information acquisition part 11 and the customer information acquisition part 12 are stored in the condition storage part 13.

In the embodiment, since information about the surplus power is directly inputted from the customer B 30, the input information can be used as it is for the estimated value of the surplus power.

Then, in step S14, the demand conditions and the supply conditions stored in the condition storage part 13 are checked with each other to detect a combination of the customer A 20 and the customer B 30 matching the conditions. Here, when there is a combination that matches the conditions, the process proceeds to step S15. On the other hand, when there is no combination that matches the conditions, the process proceeds to step S16.

Then, in step S15, the surplus power is supplied from the customer B 30 to the customer A 20 in the predetermined time period based on the matched combination.

The supply of the surplus power is performed from the customer B 30 to the customer A 20 via the smart meters 28 and 38.

Then, in step S16, the information is updated by deleting the demand conditions of the customer A 20 and the supply conditions of the customer B 30 constituting the matched combination from the condition storage part 13.

Accordingly, only conditions of a plurality of customers that have not yet been matched are stored in the condition storage part 13.

<Narrow-down of customers B 30>

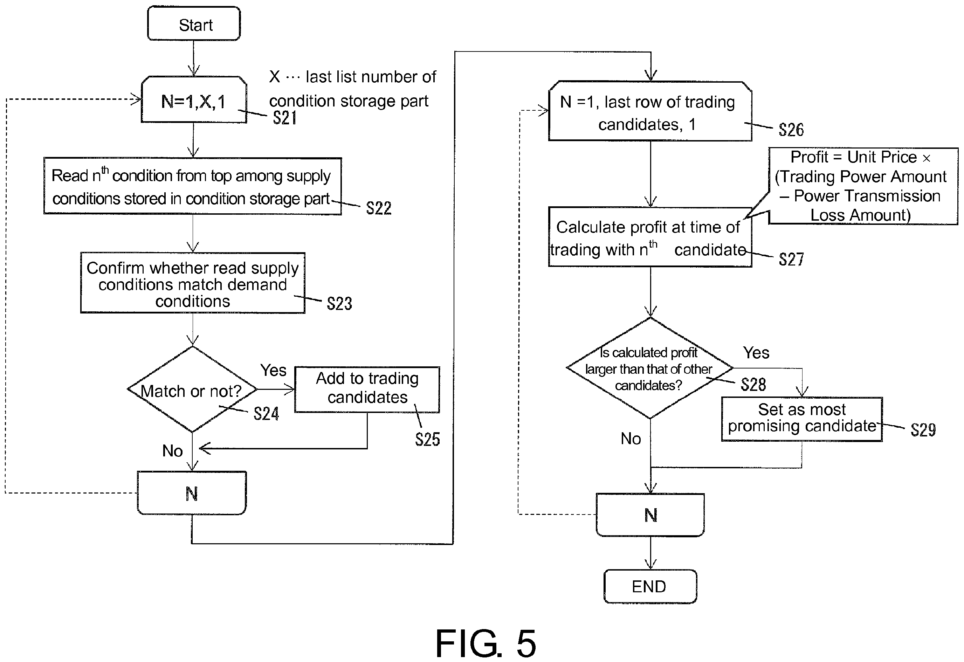

Here, when there are a plurality of customers B 30 that can supply the power to the customer A 20 as a result of the matching based on the demand conditions and the supply conditions, a method of narrowing down the plurality of the customers B 30 to one customer is performed according to the flowchart illustrated in FIG. 5.

Here, a case that power of 100 kwh is desired to be supplied to Z-chome, Kizukadai, Kizukawa-shi, Kyoto at a unit price of 60/kwh after 12:01 on October 14, 2015 as demand conditions at the customer A will be described.

That is, in step S21, the supply conditions of the plurality of the customers B 30 stored in the condition storage part 13 are confirmed sequentially from a first row with respect to the demand conditions inputted by the customer A 20.

Specifically, the supply conditions of the plurality of the customers B illustrated in FIG. 7 are stored in the condition storage part 13 together with the demand conditions of the customer A 20 illustrated in FIG. 6.

The demand conditions of the customer A illustrated in FIG. 6 include, for example, a date and time on which the surplus power can be required, a name of a registrant (the name of the customer A, the company name, a facility name, or the like), an attribute (a lender), the required power amount (an estimated value), a place (an address or the like), and a desired unit price (a reward of the surplus power).

The supply conditions of the plurality of the customers B1 to B4 illustrated in FIG. 7 include, for example, a date and time on which the surplus power can be supplied, a name of a registrant (a name of the customer B, a company name, a facility name, or the like), an attribute (a lender), the surplus power amount (an estimated value), a place (an address or the like), and a desired unit price (a reward of the surplus power).

Then, in step S22, the supply conditions of the plural customers B1 to B4 illustrated in FIG. 7 are read one by one.

Then, in step S23, it is confirmed whether the read supply conditions of the customers B1 to B4 match the demand conditions of the customer A.

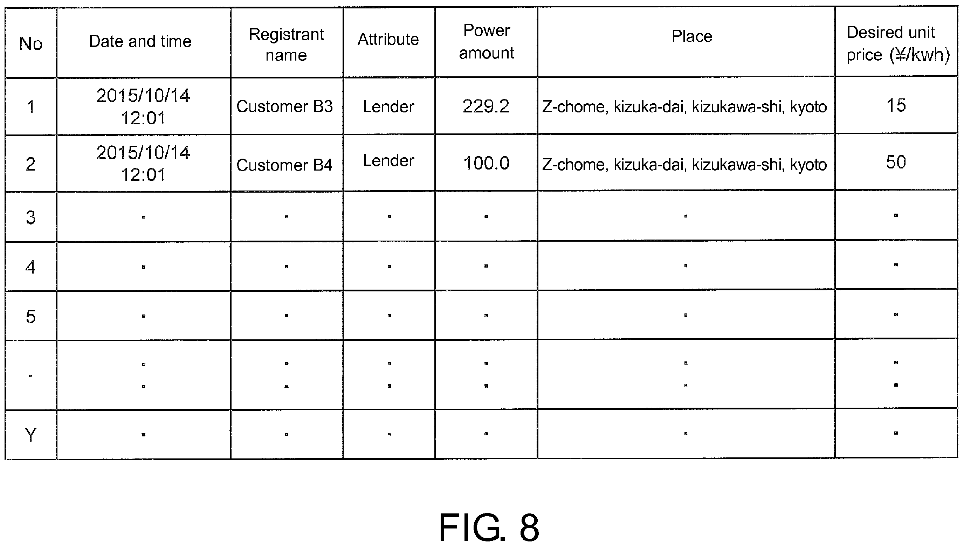

Then, in step S24, when the conditions match each other, the process proceeds to step S25, and the supply conditions of the customers B1 to B4 are added as trading candidates (see FIG. 8). Step S21 and the subsequent processes are repeatedly performed until verification is made as to whether or not all the conditions stored in the condition storage part 13 match.

On the other hand, when the conditions do not match each other in step S24, the process returns to step S21 until the verification is made as to whether or not all the conditions stored in the condition storage part 13 match, and content of the supply conditions of the other customers B1 to B4 are read and it is confirmed whether or not the conditions match.

Specifically, first, the conditions of the date and time (12:00) and the surplus power amount (55.0 kwh) of the customer B1 do not match among the conditions of the customers B1 to B4 illustrated in FIG. 7. Further, since addresses are different from each other like X-chome and Y-chome, and Z-chome of the customer A, it is assumed that the power transmission loss amount to be described below is large.

Next, in step S26, the supply conditions of the plurality of the customers B3 and B4 included in the list which have been stored as the trading candidates illustrated in FIG. 8 are read line by line up to the last row.

Next, in step S27, the supply conditions of the trading candidate is read and profit calculation at the time of trading with the Nth candidate is performed.

Specifically, the profits of the customers B3 and B4 are calculated using the following profit calculation equation (1).

$$\text{Profit} = \text{Unit Price} \times (\text{Trading Power Amount} - \text{Power Transmission Loss Amount}) \cdots (1)$$

Here, the unit price means a reward when the surplus power set by the customers B3 and B4 is supplied, and in the example illustrated in FIG. 8, the customer B3 is set to ¥15/kwh, and the customer B4 is set to 50¥/kwh.

The power transmission loss amount means a loss occurring when the surplus power is transmitted to the customer A, and the power transmission loss increases mainly when a distance from a power transmission source to a power transmission destination increases. Therefore, an estimated value of the power transmission loss amount is calculated based on the distance to the customer A. Therefore, it is predicted from information on the places included in the supply conditions that the power transmission loss amount is large in the customers B 1 and B 2 distant from the customer A as illustrated in FIG. 7.

Then, in step S28, the customers B3 and B4 on the supply side with the matching conditions are compared in terms of the magnitude of the calculated profit. As a result, in step S29, the customer B4 with the largest calculated profit is set as the final candidate.

That is, it is estimated that the power transmission loss to the customer A is at substantially the same level between the customers B3 and B4 at the same Z-chome. The desired unit price is ¥15/kwh in the customer B3 and ¥50/kwh in the customer B4, and both of which match the conditions of the desired unit price of the customer A.

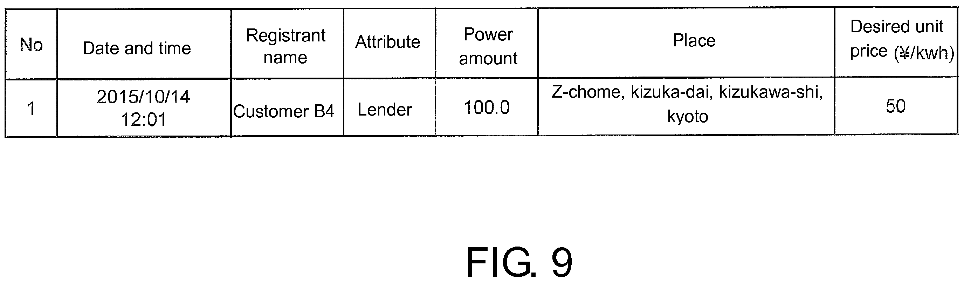

Therefore, in the power trading matching system 10, the customer B4 is finally selected as illustrated in FIG. 9, as the combination that satisfies the condition of the customer A that is a demand side and in which the profit of the customer B that is a supply side is maximized. Accordingly, the conditions of the demand side and the supply side can be satisfied.

After the processes of steps S28 and S29, a comparison of the calculated profits is performed for all the trading candidates, and the process is ended.

When the plurality of the customers B are narrowed down, a combination may be selected such that the amount of payment of the customer A is minimized.

(Embodiment 2)

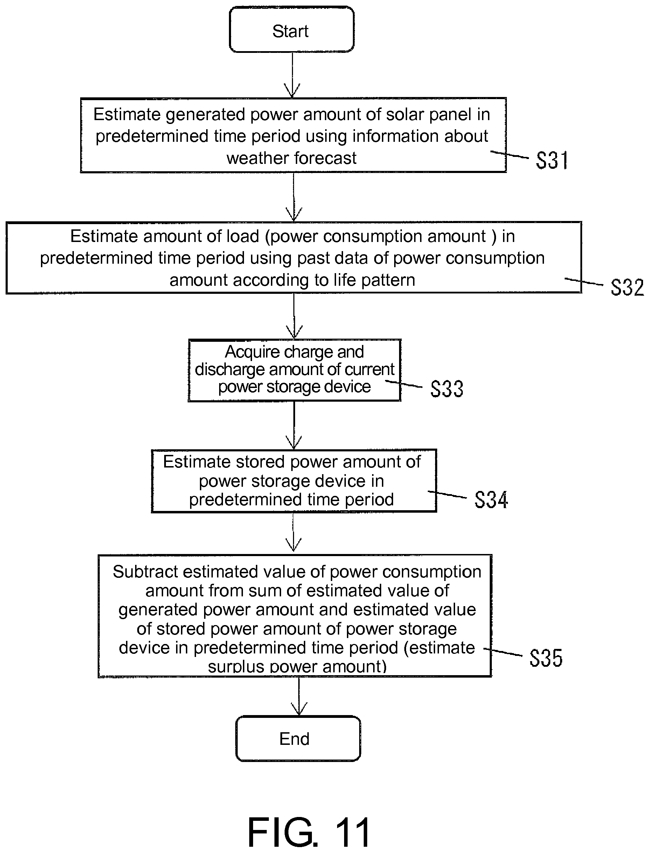

A power trading matching system 100 according to the embodiment will be described with reference to FIGs. 10 and 11.

That is, the power trading matching system 100 of the embodiment is different from the power trading matching system 10 of Embodiment 1 in that the electronic terminal is not provided in the customer A 120 and the customer B 130, as illustrated in FIG. 10.

Since the basic architecture excluding the above point is the same as in Embodiment 1, the components having the same functions as those in Embodiment 1 are denoted with the same reference numerals, and detailed description thereof will be omitted.

Specifically, in the power trading matching system 100, a required power amount information acquisition part 111 automatically receives information about the required power amount (required power amount, a date and time, a place, a reward, or the like) from the EMS 26 at the customer A 120 side.

A customer information acquisition part 112 automatically receives information about the supply conditions of surplus power (the surplus power amount, a date and time, a place, a reward, or the like) from the EMS 36 at the customer B 130 side.

That is, in the power trading matching system 100 according to the embodiment, information about the required power amount inputted by the customer A 120 is not used, and the demand conditions estimated in the EMS 26 is used. Similarly, the information about the surplus power amount inputted by the customer B 130 is not used, and the supply conditions estimated by the EMS 36 is used.

Therefore, in the embodiment, the EMS 36 estimates the generated power amount of the solar panel 31 in a predetermined time period using information about the weather forecast (sunshine time). Then, the EMS 36 estimates the stored power amount in the power storage device 33 in the predetermined time period using the current stored power amount of the power storage device 33 and an estimated value of the generated power amount. Further, the EMS 36 estimates the power consumption amount that changes according to a life pattern of the customer B 30.

The estimated values of the generated power amount and the stored power amount in the predetermined time period estimated by the EMS 36 are transmitted to the customer information acquisition part 112 and stored in the condition storage part 13.

The surplus power estimation part 114 calculates the estimated value of the power consumption amount that changes according to a life pattern of the customer B 30 from the sum of the estimated value of the generated power amount of the solar panel 31 stored in the condition storage part 13 and the estimated value of the stored power amount of the power storage device 33 to estimate the surplus power amount at the customer B.

Accordingly, the surplus power estimation part 114 can estimate the surplus power amount that can be supplied from the customer B 30 to another customer A 20 in the predetermined time period.

More specifically, the surplus power amount is estimated according to a flowchart illustrated in FIG. 11.

That is, in step S31, the generated power amount in the predetermined time period of the solar panel 31 owned by the customer B 130 is estimated by using the information about the weather forecast (sunshine time).

Then, in step S32, the power consumption amount in the predetermined time period is estimated using data of the amount of the load (the amount of power consumption) that changes according to a past life pattern of the customer B 130.

Then, in step S33, the charge and discharge amount of the current power storage device is acquired.

Then, in step S34, the stored power amount of the power storage device in the predetermined time period is designated based on information about the charge and discharge amount of the current power storage device.

Then, in step S35, the estimated value of the amount of the load (the power consumption amount) is subtracted from the sum of the estimated values of the generated power amount and the stored power amount of the customer B 130 in the predetermined time period.

Accordingly, it is possible to estimate the surplus power amount in the predetermined time period of the customer B 130.

[Other Embodiments]

Although the embodiments of the present invention have been described above, the present invention is not limited to the above embodiments, and various modifications can be performed without departing from the gist of the invention.

(A)

In Embodiments 1 and 2, the example in which power trading matching is performed according to the flowcharts illustrated in FIGs. 2, 3, 4, 5, and 11 as the power trading matching method according to the present invention has been described. However, the present invention is not limited thereto.

For example, the present invention may be implemented as a power trading matching program that causes a computer to execute the power trading matching method implemented according to the flowcharts illustrated in FIGs. 4, 5, and 11.

Further, the present invention may be implemented as a recording medium having the power trading matching program recorded thereon.

(B)

In Embodiment 1, the example in which the demand information of the power from the customer A 20 and the supply information of the surplus power from the customer B 30 are inputted via the electronic terminals 27 and 37, as illustrated in FIG. 1, has been described. Meanwhile, in Embodiment 2, the example in which the demand information of the power of the customer A 120 is acquired from the EMS 26 and the supply information of the surplus power of the customer B 130 is automatically acquired from the EMS 36, as illustrated in FIG. 10, has been described. However, the present invention is not limited thereto.

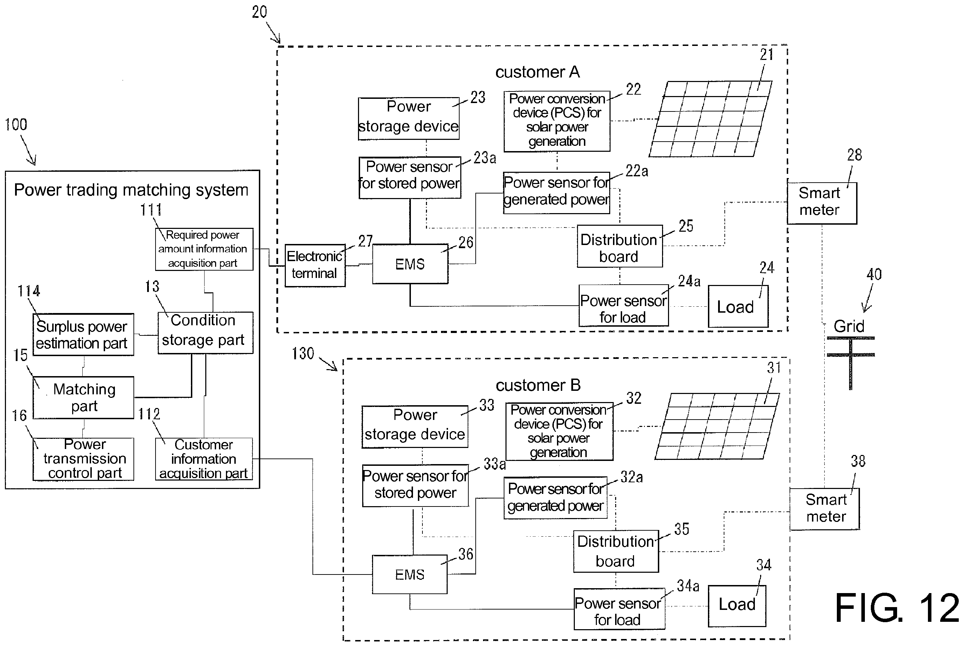

For example, a configuration in which the demand information of the power from the customer A 20 is inputted via the electronic terminal 27, and the supply information of the surplus power from the customer B 130 is automatically acquired from the EMS 36, as illustrated in FIG. 12, may be adopted.

That is, the configuration of the customer A 20 of Embodiment 1 and the configuration of the customer B 130 of Embodiment 2 may be combined.

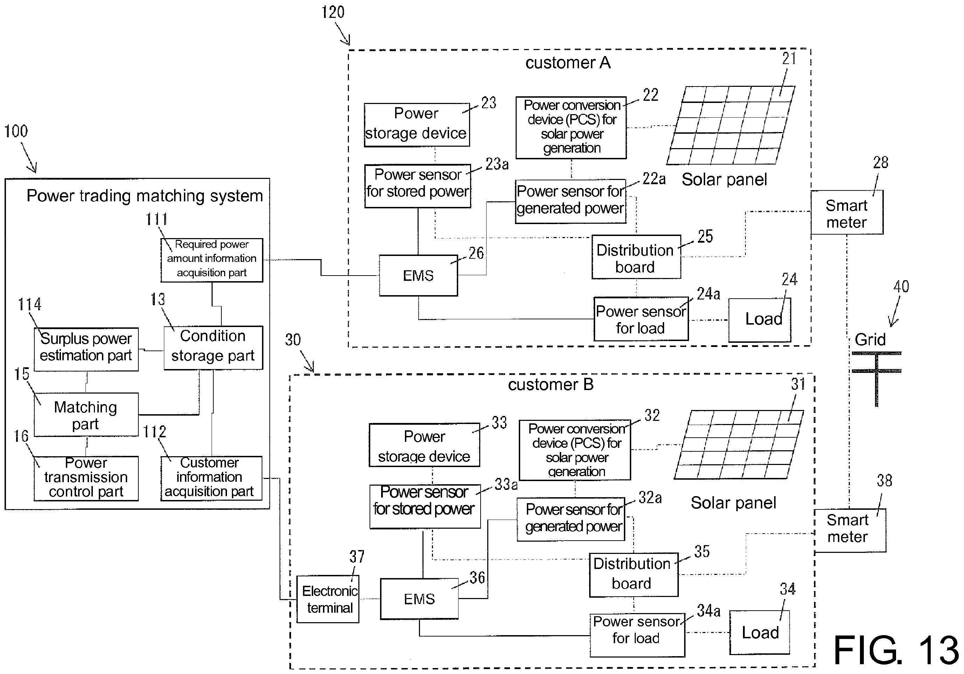

Alternatively, for example, a configuration in which the demand information of the power from the customer A 120 is automatically acquired from the EMS 26, and the supply information of the surplus power from the customer B 30 is inputted via the electronic terminal 37, as illustrated in FIG. 13, may be adopted.

That is, the configuration of the customer B 30 of Embodiment 1 and the configuration of the customer A 120 of Embodiment 2 may be combined.

(C)

In Embodiments 1 and 2 described above, the example in which one customer A 20 or 120 is combined with one customer B 30 or 130 and accommodating of the surplus power is performed has been described. However, the present invention is not limited thereto.

For example, when the surplus power amount generated in the customer B is larger than the required power amount of the customer A, one customer B may be combined with a plurality of customers A.

In this case, the surplus power can be supplied from the customer B that generates a large amount of surplus power to the plural customers A. Thus, the surplus power can be accommodated among the plural customers more efficiently.

(D)

In Embodiment 1, the examples that the electronic terminals 27 and 37 acquire the information on the generated power amount, the stored power amount, and the power consumption amount at the customers A 20 and B 30 via the EMSs 26 and 36, as illustrated in FIG. 1, has been described. However, the present invention is not limited thereto.

For example, the electronic terminal may acquire the information about the generated power amount, the stored power amount, and the power consumption amount at the customers A and B using communication functions of smart meters respectively installed at the customers A and B.

(E)

In Embodiments 1 and 2, the examples that the solar panels (solar power generation devices) 21 and 31 are used as the power generation devices owned by the plural customers A 20, B 30, A 120, and B 130 in the power trading matching system has been described. However, the present invention is not limited thereto.

For example, another power generation device such as a wind power generation device or a geothermal power generation device may be used as the power generation device owned by the plural customers.

(F)

In the above embodiments, the example in which various types of information such as the information on the required power amount and the customer information is stored in the condition storage part 13 provided in the power trading matching system 10 has been described. However, the present invention is not limited thereto.

For example, the various types of information may be stored using a server or a cloud service provided outside the system.

[Industrial Applicability]

The power trading matching system of the present invention has an effect that it is possible to efficiently accommodate the surplus power between a plurality of customers that own the power generation device and the storage battery, and thus, is widely applicable, for example, in a community including a plurality of customers that own the power generation device and the storage battery.

[Reference Signs List]

    10 Power trading matching system
    11 Required power amount information acquisition part
    12 Customer information acquisition part
    13 Condition storage part (storage part)
    14 Surplus power estimation part

15 Matching part
16 Power transmission control part
20 Customer A (first customer)
21 Solar panel (power generation device)
22 Power conversion device (PCS) for solar power generation
22a Power sensor for generated power
23 Power storage device (storage battery)
23a Power sensor for stored power
24 Load
24a power sensor for load
25 Distribution board
26 EMS
27 Electronic terminal
28 Smart meter
30 customer B (second customer)
31 Solar panel (power generation device)
32 Power conversion device (PCS) for solar power generation
32a Power sensor for generated power
33 Power storage device (storage battery)
33a Power sensor for stored power
34 Load
34a Power sensor for load
35 Distribution board
36 EMS
37 Electronic terminal
38 Smart meter
40 Grid
100 Power trading matching system
111 Required power amount information acquisition part
112 Customer information acquisition part
114 Surplus power estimation part
120 Customer A (first customer)
130 Customer B (second customer)
t1 to t5 Time zone (customer A side)
T1 to T5 Time zone (customer B side)

**Claims**

1. A power trading matching system for accommodating surplus power in a plurality of customers each of which owns a power generation device and a storage battery, the power trading matching system comprising:

   a required power amount information acquisition part that acquires information about a power amount required in a predetermined time period by a first customer;
   a customer information acquisition part that acquires information about the power generation device and the storage battery owned by a second customer, and a power consumption amount of the second customer;
   a surplus power estimation part that estimates a surplus power amount that can be supplied at the second customer based on information about a generated power amount of the power generation device, a stored power amount in the storage battery, and the power consumption amount in the predetermined time period of the second customer acquired in the customer information acquisition part; and
   a matching part that collates the surplus power amount that can be supplied from the second customer estimated in the surplus power estimation part with the information about the required power amount of the first customer acquired by the required power amount information acquisition part and detects a combination of the first customer and the second customer between which trading is established.

2. The power trading matching system according to claim 1, further comprising:

   a power transmission control part that transmits the surplus power from the second customer that is a supply source to the first customer that is a supply destination based on the combination of the first customer and the second customer detected by the matching part.

3. The power trading matching system according to claim 1 or 2, further comprising a storage part that stores the information acquired by the required power amount information acquisition part and the information acquired by the customer information acquisition part.

4. The power trading matching system according to any one of claims 1 to 3, wherein the surplus power estimation part estimates the generated power amount of the power generation device in the predetermined time period of the second customer based on information about a weather forecast.

5. The power trading matching system according to any one of claims 1 to 4, wherein the surplus power estimation part estimates the power consumption amount in the predetermined time period of the second customer based on data in which the power consumption amount according to a past life pattern has been recorded.

6. The power trading matching system according to any one of claims 1 to 5, wherein the surplus power estimation part acquires the stored power amount of the storage battery at a current time to estimate the stored power amount of the storage battery in the predetermined time period of the second customer.

7. The power trading matching system according to any one of claims 1 to 6, wherein the required power amount information acquisition part acquires information about the required power amount inputted by the first customer.

8. The power trading matching system according to any one of claims 1 to 7, wherein the required power amount information acquisition part acquires information including at least one of a power amount that the first customer desires to receive, a desired date and time of reception, a time period, a place, a unit price of power, and a reward.

9. The power trading matching system according to any one of claims 1 to 8, wherein the customer information acquisition part acquires information about the power generation device and the storage battery inputted by the second customer.

10. The power trading matching system according to any one of claims 1 to 9, wherein when there are a plurality of second customers of which trading is established with the first customer, the matching part selects a combination of the first customer and the second customer based on a unit price of power that is transmitted from the second customer to the first customer.

11. The power trading matching system according to any one of claims 1 to 10, wherein when there are a plurality of second customers of which trading is established with the first customer, the matching part selects a combination of the first customer and the second customer based on a magnitude of a power transmission loss when power is transmitted from the second customer to the first customer.

12. A power trading matching method for accommodating surplus power in a plurality of customers each of which owns a power generation device and a storage battery, the power trading matching method comprising:

a required power amount information acquisition step of acquiring information about a power amount required in a predetermined time period by a first customer;
a customer information acquisition step of acquiring information about the power generation device and the storage battery owned by a second customer, and a power consumption amount of the second customer;
a surplus power estimation step of estimating a surplus power amount that can be supplied at the second customer based on information about a generated power amount of the power generation device, a stored power amount in the storage battery, and the power consumption amount in the predetermined time period of the second customer acquired in the customer information acquisition step; and
a matching step of collating the surplus power amount that can be supplied from the second customer estimated in the surplus power estimation step with the information about the required power amount of the first customer acquired in the required power amount information acquisition step and detecting a combination of the first customer and the second customer between which trading is established.

13. A power trading matching program for accommodating surplus power in a plurality of customers each of which owns a power generation device and a storage battery, the power trading matching program causing a computer to execute a power trading matching method, and comprising:

a required power amount information acquisition step of acquiring information about a power amount required in a predetermined time period by a first customer;

a customer information acquisition step of acquiring information about the power generation device and the storage battery owned by a second customer, and a power consumption amount of the second customer;

a surplus power estimation step of estimating a surplus power amount that can be supplied at the second customer based on information about a generated power amount of the power generation device, a stored power amount in the storage battery, and the power consumption amount in the predetermined time period of the second customer acquired in the customer information acquisition step; and

a matching step of collating the surplus power amount that can be supplied from the second customer estimated in the surplus power estimation step with the information about the required power amount of the first customer acquired in the required power amount information acquisition step and detecting a combination of the first customer and the second customer between which trading is established.

FIG. 1

FIG. 2

Power situation in customer B

FIG. 3

EP 3 422 282 A1

Customer A                                          Plurality of customers B

Input information such as required            Input information such as stored power
power amount, required date and                 amount of storage battery, and
time, and unit price        — S11           suppliable surplus power amount — S12

Store respective inputted    conditions
in condition storage part        — S13

Match or not?                    Yes
S14                          Control power transmission
No                          from customer b to customer A — S15

Update information
stored in storage part — S16

END

# FIG. 4

EP 3 422 282 A1

```
                    ┌──────────┐
                    │  Start   │
                    └────┬─────┘
                         ↓
                  ┌──────────────┐   X ··· last list number of
         ┌───────→│  N=1,X,1     │   condition storage part
         │        └──────────────┘ ─ S21
         │                ↓
         │   ┌────────────────────────────────────┐
         │   │ Read nᵗʰ condition from top among   │
         │   │ supply conditions stored in         │ ─ S22
         │   │ condition storage part              │
         │   └────────────────────┬───────────────┘
         │                        ↓
         │          ┌──────────────────────────┐
         │          │ Confirm whether read      │
         │          │ supply conditions match   │ ─ S23
         │          │ demand conditions         │
         │          └────────────┬──────────────┘
         │                       ↓
         │                            Yes   ┌──────────────┐
         │            ◇ Match or not? ────→ │ Add to       │
         │                                  │ trading      │
         │                 S24              │ candidates   │
         │                  No              └──────┬───────┘
         │                   ↓    ←────────────────┘  S25
         │              ┌────────┐
         └──────────────│   N    │
                        └────┬───┘
                             └────────────→
```

$$\text{Profit} = \text{Unit Price} \times (\text{Trading Power Amount} - \text{Power Transmission Loss Amount})$$

```
         ┌────────────────────────────┐
    ┌───→│ N =1, last row of trading  │
    │    │ candidates, 1              │ ─ S26
    │    └──────────────┬─────────────┘
    │                   ↓
    │    ┌────────────────────────────┐
    │    │ Calculate profit at time   │
    │    │ of trading with nᵗʰ        │ ─ S27
    │    │ candidate                  │
    │    └──────────────┬─────────────┘
    │                   ↓
    │          Is calculated profit    Yes   ┌──────────────┐
    │       ◇ larger than that of ────────→  │ Set as most  │
    │          other candidates?             │ promising    │ ─ S29
    │                              S28        │ candidate    │
    │              No                         └──────┬───────┘
    │               ↓    ←───────────────────────────┘
    │          ┌────────┐
    └──────────│   N    │
               └────┬───┘
                    ↓
               ┌────────┐
               │  END   │
               └────────┘
```

FIG. 5

| No | Date and time | Registrant name | Attribute | Required power amount of (estimated value) | Place | Desired unit price (¥/kwh) |
|---|---|---|---|---|---|---|
| 1 | 2015/10/14 12:01 | Customer A | User | 100.0 | Z-chome, kizuka-dai, kizukawa-shi, kyoto | 60 |
| 2 | . | . | . | . | . | . |
| 3 | . | . | . | . | . | . |
| . | . | . | . | . | . | . |
| X | . | . | . | . | . | . |

FIG. 6

EP 3 422 282 A1

| No | Date and time | Registrant name | Attribute | Required power amount of (estimated value) | Place | Desired unit price (¥/kwh) |
|---|---|---|---|---|---|---|
| 1 | 2015/10/14 12:00 | Customer B1 | Lender | 55.0 | X-chome, kizuka-dai, kizukawa-shi, kyoto | 100 |
| 2 | 2015/10/14 12:09 | Customer B2 | Lender | 234.3 | Y-chome, kizuka-dai, kizukawa-shi, kyoto | 200 |
| 3 | 2015/10/14 12:01 | Customer B3 | Lender | 229.2 | Z-chome, kizuka-dai, kizukawa-shi, kyoto | 15 |
| 4 | 2015/10/14 12:01 | Customer B4 | Lender | 100.0 | Z-chome, kizuka-dai, kizukawa-shi, kyoto | 50 |
| 5 | . | . | . | . | . | . |
| . | .<br>. | .<br>. | .<br>. | .<br>. | .<br>. | .<br>. |
| X | . | . | . | . | . | . |

## FIG. 7

EP 3 422 282 A1

| No | Date and time | Registrant name | Attribute | Power amount | Place | Desired unit price (¥/kwh) |
|---|---|---|---|---|---|---|
| 1 | 2015/10/14 12:01 | Customer B3 | Lender | 229.2 | Z-chome, kizuka-dai, kizukawa-shi, kyoto | 15 |
| 2 | 2015/10/14 12:01 | Customer B4 | Lender | 100.0 | Z-chome, kizuka-dai, kizukawa-shi, kyoto | 50 |
| 3 | . | . | . | . | . | . |
| 4 | . | . | . | . | . | . |
| 5 | . | . | . | . | . | . |
| . | . | . | . | . | . | . |
| Y | . | . | . | . | . | . |

## FIG. 8

EP 3 422 282 A1

| No | Date and time | Registrant name | Attribute | Power amount | Place | Desired unit price (¥/kwh) |
|---|---|---|---|---|---|---|
| 1 | 2015/10/14 12:01 | Customer B4 | Lender | 100.0 | Z-chome, kizuka-dai, kizukawa-shi, kyoto | 50 |

FIG. 9

EP 3 422 282 A1

FIG. 10

```
                    ┌─────────────────┐
                    │      Start      │
                    └─────────────────┘
                             │
                             ▼
        ┌────────────────────────────────────────────┐
        │  Estimate generated power amount of solar panel in │
        │  predetermined time period using information about │── S31
        │            weather forecast                 │
        └────────────────────────────────────────────┘
                             │
                             ▼
    ┌────────────────────────────────────────────────────┐
    │  Estimate amount of load (power consumption amount ) in │
    │  predetermined time period using past data of power consumption │── S32
    │        amount according to life pattern            │
    └────────────────────────────────────────────────────┘
                             │
                             ▼
            ┌─────────────────────────────┐
            │      Acquire charge and     │
            │  discharge amount of current│── S33
            │      power storage device   │
            └─────────────────────────────┘
                             │
                             ▼
            ┌─────────────────────────────┐
            │  Estimate stored power amount of │
            │      power storage device in │── S34
            │    predetermined time period │
            └─────────────────────────────┘
                             │
                             ▼
        ┌────────────────────────────────────────────┐
        │  Subtract estimated value of power consumption │
        │     amount from sum of estimated value of    │
        │  generated power amount and estimated value  │
        │    of stored power amount of power storage   │── S35
        │  device in predetermined time period (estimate │
        │            surplus power amount)             │
        └────────────────────────────────────────────┘
                             │
                             ▼
                    ┌─────────────────┐
                    │       End       │
                    └─────────────────┘
```

# FIG. 11

FIG. 12

FIG. 13

EP 3 422 282 A1

**EP 3 422 282 A1**

## INTERNATIONAL SEARCH REPORT

| | International application No. |
|---|---|
| | PCT/JP2016/083959 |

| A. CLASSIFICATION OF SUBJECT MATTER |
|---|
| *G06Q50/06*(2012.01)i, *H02J3/00*(2006.01)i, *H02J13/00*(2006.01)i |

According to International Patent Classification (IPC) or to both national classification and IPC

| B. FIELDS SEARCHED |
|---|
| Minimum documentation searched (classification system followed by classification symbols) |
| G06Q10/00-99/00, H02J3/00, 13/00 |

Documentation searched other than minimum documentation to the extent that such documents are included in the fields searched

| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2016-10276 A (Mitsubishi Electric Corp.),<br>18 January 2016 (18.01.2016),<br>paragraphs [0010] to [0051]<br>(Family: none) | 1-3,12,13<br>4-9 |
| Y | JP 2012-235644 A (NTT Data Corp.),<br>29 November 2012 (29.11.2012),<br>paragraphs [0013] to [0041]<br>(Family: none) | 4,6-9 |
| Y | WO 2014/155575 A1 (Daiwa House Industry Co.,<br>Ltd.),<br>02 October 2014 (02.10.2014),<br>paragraphs [0045] to [0047]<br>& CN 105103168 A | 5 |

☒ Further documents are listed in the continuation of Box C.  ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 01 February 2017 (01.02.17) | 14 February 2017 (14.02.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | |
| | Telephone No. |

Form PCT/ISA/210 (second sheet) (January 2015)

## INTERNATIONAL SEARCH REPORT

International application No.

PCT/JP2016/083959

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2011/086806 A1  (Rohm Co., Ltd.), 21 July 2011 (21.07.2011), paragraphs [0018] to [0051] & US 2012/0286574 A1 paragraphs [0043] to [0076] & CN 102763301 A | 1-13 |
| A | JP 2011-101532 A  (Panasonic Electric Works Co., Ltd.), 19 May 2011 (19.05.2011), paragraphs [0032] to [0075] & US 2012/0221491 A1 paragraphs [0048] to [0102] & WO 2011/055194 A1     & EP 2498365 A1 & CN 102668303 A | 1-13 |
| A | JP 2006-288162 A  (Institute of Research and Innovation), 19 October 2006 (19.10.2006), paragraphs [0017] to [0031] (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004229363 A
- JP 3722123 B